# EUROPÄISCHE PATENTANMELDUNG

(11) **EP 0 914 868 A2**
(43) Veröffentlichungstag der Anmeldung: **12.05.1999**
(21) Anmeldenummer: 98106837.2
(22) Anmeldetag: 15.04.1998
(51) Int. Cl.: B03B 9/06, B09B 3/00

(54) **Verfahren zur Behandlung (Verwertung und Entsorgung) von Ölschlamm**

(30) Priorität: 18.04.1997 DE 19716214
(71) Anmelder: Claus, Hans-Dieter, Dr., 94327 Bogen (DE); Münch, Hans-Georg, Dr., 49809 Lingen (DE)
(72) Erfinder: Claus, Hans-Dieter, Dr., 94327 Bogen (DE)
(74) Vertreter: Zahn, Roland, Dipl.-Ing.

(57) **Zusammenfassung**

In Verbindung mit einem Verfahren zur Entsorgung beziehungsweise Verwertung von Ölschlamm oder dergleichen mit Öl verunreinigtem Gut wird vorgeschlagen, das zu entsorgende Gut als Sekundärrohstoff zur Herstellung keramischer Produkte, wie zum Beispiel Ziegel, oder zur Herstellung von Schmelzgranulat zu verwenden.

## Beschreibung

Im Zusammenhang mit der Erdölförderung fallen als Abfälle sogenannte Ölschlämme an, die durch erhöhte Gehalte an Mineralölkohlenwasserstoffen und Schwermetallen charakterisiert sind. Da für die Behandlung dieser Schlämme bis heute keine praktikablen Verfahren zur Verfügung stehen, werden die Materialien nach dem Stand der Technik in mehr oder weniger gut gesicherten Deponien gelagert. Da diese Art der Lagerung in vielen Ländern nicht mehr den ökologischen Anforderungen entspricht, sucht die Erdölindustrie weltweit nach Möglichkeit die Ölschlämme so zu behandeln, daß eine gefahrlose Ablagerung oder Verwertung ermöglicht wird.

Geeignete Verfahren müssen sich dadurch auszeichnen, daß einerseits die organische Komponente (Kohlenwasserstoffe) abgebaut oder mineralisiert wird, und andererseits die Schwermetalle in eine Form mit geringer Bioverfügbarkeit überführt werden. Für den Abbau von Kohlenwasserstoffen kommen prinzipiell zwei Verfahren in Frage, nämlich ein mikrobiologischer Abbau oder eine thermische Behandlung. Da Schwermetalle als Elemente nicht "abgebaut" werden können, kommt hier als Maßnahme eine Immobilisierung in Frage, zum Beispiel durch Zugabe von verfestigenden Stoffen oder die Einbindung in schwer löslicher Matrizes.

Bisher durchgeführte Versuche haben gezeigt, daß eine mikrobiologische Sanierung der Ölschlämme nicht praktikabel ist, da zum einen die Gesamtgehalte an Kohlenwasserstoffen für diese Verfahren zu hoch sind und die toxischen Eigenschaften der Schwermetalle sich außerdem negativ auf die Mikroorganismentätigkeit auswirken. Eine Lösung der Schwermetallproblematik wäre im übrigen mit diesem Verfahren nicht gegeben.

Durch eine thermische Behandlung in geeigneten Anlagen zur Bodensanierung lassen sich die Kohlenwasserstoffe verbrennen, die verbleibenden mineralischen Rückstände sind aber nach wie vor mit Schwermetallen belastet.

Aus der Klärschlammbehandlung ist eine Verfahrenskombination bekannt, bei der mit den Einzelschritten Trocknung, Niedertemperaturkonvertierung und Verbrennung/Verglasung eine Verwertung von belasteten Klärschlämmen als Baustoff erreicht wird (vergleiche Meißner, W. (1996): Verwertbare Produkte aus Klärschlamm, WLB Wasser, Luft und Boden 3/1996, Seite 80-83).

Eine verfestigung von Ölschlämmen durch die Zugabe von geeigneten Stoffen (Zement, Kalk, Speichermineralien o.ä.) ist dazu geeignet, das Gefährdungspotential der Schlämme zu reduzieren (vergleiche Jago, U. (1996): Pilotversuch zur Immobilisierung von Ölrückständen durch Speichermineralien, Deutsche Wissenschaftliche Gesellschaft für Erdöl, Erdgas und Kohle e.V. (DGMK), Tagungsbericht 9607, Seite 129-136); allerdings sind die Maßnahmen keine Dauerlösungen sondern verlagern das Problem nur zeitlich.

Eine weitere Teillösung kann in der Mengenreduzierung gesehen werden, wobei die Ölschlämme durch geeignete Verfahren, zum Beispiel Bodenwäsche, in eine verwertbare, nicht kontaminierte Komponente (gewaschener Boden) und in eine belastete Komponente (Feinkornanteil mit Schadstoffen) aufgeteilt werden. Für diese schadstoffreiche Feinfraktion stehen wiederum verschiedene Behandlungsverfahren zur verfügung (vergleiche Hörber, G. (1996): Aufbereitung kontaminierten Böden - Behandlung der schadstoffreichen Feinfraktion aus Bodenwaschanlagen, VDI Koordinierungsstelle Umwelttechnik, Jahrbuch 1996/1997, VDI-Verlag Düsseldorf).

Da mit den vorhandenen Sanierungs- und Behandlungsverfahren jedoch jeweils nur Teilaspekte der Gesamtproblematik gelöst werden können, wird gemäß der vorliegenden Erfindung eine Kombination von verschiedenen Einzelverfahren vorgeschlagen, die im folgenden näher beschrieben sind.

Der Grundgedanke der vorliegenden Erfindung ist zunächst darin zu sehen, daß der zu entsorgende Ölschlamm beziehungsweise das zu entsorgende Gut als Sekundärrohstoff als Herstellung keramischer Werkstoffe, insbesondere zur Herstellung keramischer Produkte, wie zum Beispiel Ziegel, oder zur Herstellung von Schmelzgranulat verwandt wird.

Im Einzelnen werden zur Verifizierung dieser Grundidee folgende Verfahrensschritte und Verfahrenskombinationen angewandt: Das aus Deponien und Ablagerungen entnommene Material (Ölschlamm) wird zunächst von groben Stoffen und Verunreinigungen (wie zum Beispiel Holz, Textilien, Metallen oder Steinen) befreit. Dies kann in gängigen Anlagen erfolgen, wie sie zum Beispiel in Bodenwaschanlagen integriert und im Stand der Technik ausreichend beschrieben sind. Das von Grobstoffen und sogenanntem Leichtgut befreite Material kann dann zur Mengenreduzierung in geeigneten Anlagen (Bodenwäsche, Bodensiebung) in eine schadstoffhaltige Feinfraktion und eine Sandfraktion mit reduziertem Schadstoffgehalt aufgeteilt werden. Diese separierte Sandfraktion läßt sich bei Unterschreitung der vorgegebenen Grenzwerte gegebenenfalls unmittelbar als Baustoff oder als Schlackebildner in metallurgischen Prozessen einsetzen.

Die schadstoffreiche Feinfraktion wird entweder direkt als Zuschlagsstoff in der keramischen Produktion eingesetzt oder aber durchläuft vorher noch eine thermische Behandlung (Trocknung bis eine Trockensubstanzgehalt von über 90 Gewichtsprozent erreicht ist und/oder Niedertemperaturkonvertierung zur Austreibung von Öl oder Quecksilber). Dieser zusätzliche Schritt ist insbesondere dann erforderlich, wenn erhöhte Quecksilbergehalte im Material vorhanden sind.

Alternativ zur Verwertung als Sekundärrohstoff bei der keramischen Produktion kann der Feinkornanteil gegebenenfalls auch in einer Hochtemperaturverbrennung verglast werden, wobei ebenfalls der o.g. Zwischenschritt der thermischen Behandlung eingeschaltet werden kann.

Sowohl im keramischen Endprodukt (Ziegel) wie auch in dem aus der Verbrennung erhaltenen Schmelzgranulat sind die Schwermetalle fest eingebunden und weisen nur geringe Eluierbarkeiten auf. Hierdurch ist der Einsatz als Baustoff gewährleistet. Die organische Komponente der Ölschlämme wird in den thermischen Prozessen zerstört, wobei der Einergiegehalt jeweils wieder dem Gesamtprozeß zugeführt wird.

Im Hinblick auf die Verwendung als Sekundärrohstoff bei der Ziegelherstellung ist das verfahren dadurch gekennzeichnet, daß das von den groben Bestandteilen befreite Gut nacheinander wie folgt behandelt wird:
Schritt a:
   - In einer Sieb- oder Bodenwaschanlage wird der Sand abgetrennt und die Schadstoffe in einer Feinkornfraktion (Ton und Schluff) angereichert;
Schritt b:
   - In einer nachfolgenden Trocknungsanlage wird der Feinkornfraktion das enthaltene Wasser entzogen, bis eine Trockensubstanzgehalt von über 90 Gewichtsprozent erreicht ist;
Schritt c:
   - In einer nachgeschalteten thermischen Behandlung (Niedertemperaturkonvertierung) wird das getrocknete Gut von Öl und Quecksilber befreit;
Schritt d:
   - In einem abschließenden Verfahrensschritt wird der verbleibende Rückstand (Pyrolysekoks) als Sekundärrohstoff in einer Ziegelei zur Produktion von keramischen Erzeugnissen eingesetzt.

Gegebenenfalls kann der unter c) beschriebene Verfahrensschritt entfallen und das getrocknete Feinkornmaterial direkt als Sekundärrohstoff in der keramischen Produktion eingesetzt werden.

Auch ist es denkbar, daß die unter b) und c) beschriebenen Verfahrensschritte entfallen und das Feinkornmaterial direkt als Sekundärrohstoff in der keramischen Produktion eingesetzt wird.

In weiterer Ausgestaltung können die unter a) bis c) beschriebenen Verfahrensschritte entfallen und das von groben Bestandteilen gereinigte Material kann direkt als Sekundärrohstoff in der keramischen Produktion eingesetzt werden.

Im Hinblick auf die Verwertung und Verbindung mit Schmelzgranulat ist das Verfahren dadurch gekennzeichnet, daß das von den groben Bestandteilen befreite Gut nacheinander wie folgt behandelt wird:
Schritt a:
   - In einer Sieb- oder Bodenwaschanlage wird der Sand abgetrennt und die Schadstoffe in einer Feinkornfraktion (Ton und Schluff) angereichert;
Schritt b:
   - In einer nachfolgenden Trocknungsanlage wird der Feinkornfraktion das enthaltene Wasser entzogen, bis eine Trockensubstanzgehalt von über 90 Gewichtsprozent erreicht ist;
Schritt c:
   - In einer nachgeschalteten thermischen Behandlung (Niedertemperaturkonvertierung) wird das getrocknete Gut von Öl und Quecksilber befreit;
Schritt d:
   - Der verbleibende Rückstand (Pyrolysekoks) wird in einem Hochtemperaturofen verbrannt, wobei der mineralische Anteil aufgeschmolzen und als Schmelzgranulat abgezogen wird.

Gegebenenfalls kann auch hierbei der unter c) beschriebene Verfahrensschritt entfallen und das getrocknete Feinkornmaterial direkt in der Hochtemperaturverbrennung eingesetzt werden.

Auch können die unter b) und c) beschriebenen Verfahrensschritte entfallen und das Feinkornmaterial direkt in der Hochtemperaturverbrennung eingesetzt werden.

Ferner ist es auch möglich, daß die unter a) bis c) beschriebenen Verfahrensschritte entfallen und das von groben Bestandteilen gereinigte Material direkt in der Hochtemperaturverbrennung eingesetzt wird.

## Patentansprüche

1. Verfahren zur Entsorgung beziehungsweise Verwertung von Ölschlamm oder dergleichen mit Öl verunreinigtem Gut, dadurch gekennzeichnet,
wobei aus dem zu verwertenden Gut zunächst die groben Bestandteile ausgesondert werden,
dadurch gekennzeichnet,
daß das von den groben Bestandteilen befreite Gut nacheinander wie folgt behandelt wird:
a) in einer Sieb- oder Bodenwaschanlage wird der Sand abgetrennt und die Schadstoffe in einer Feinkornfraktion (Ton oder Schluff) angereichert,
b) in einer nachfolgenden Trocknungsanlage wird der Feinkornfraktion das enthaltene Wasser entzogen, bis ein Trockensubstanzgehalt von über 90 Gewichtsprozent erreicht ist,
c) in einer nachgeschalteten thermischen Behandlung (Niedertemperaturkonvertierung) wird das getrocknete Gut von Öl und Quecksilber befreit, und
d) in einem abschließenden Verfahrensschritt wird der verbleibende Rückstand (Pyrolysekoks) als Sekundärrohstoff in einer Ziegelei zur Produktion von keramischen Erzeugnissen eingesetzt.

2. Verfahren zur Verwertung von Ölschlamm oder dergleichen nach Anspruch 1,
dadurch gekennzeichnet,
daß der unter c) beschriebene Verfahrensschritt entfällt und das getrocknete Feinkornmaterial direkt als Sekundärrohstoff in der keramischen Produktion eingesetzt wird.

3. Verfahren zur Verwertung von Ölschlamm oder dergleichen nach Anspruch 1,
dadurch gekennzeichnet,
daß die unter b) und c) beschriebenen Verfahrensschritte entfallen und das Feinkornmaterial direkt als Sekundärrohstoff in der keramischen Produktion eingesetzt wird.

4. Verfahren zur Verwertung von Ölschlamm oder dergleichen nach Anspruch 1,
daß die unter a) bis c) beschriebenen Verfahrensschritte entfallen und das von groben Bestandteilen gereinigte Material direkt als Sekundärrohstoff in der keramischen Produktion eingesetzt wird.

5. Verfahren zur Verwertung von Ölschlamm oder dergleichen mit Öl verunreinigtem Gut,
wobei aus dem zu verwertenden Gut zunächst die groben Bestandteile ausgesondert werden,
dadurch gekennzeichnet,
daß das von den groben Bestandteilen befreite Gut nacheinander wie folgt behandelt wird:
a) in einer Sieb- oder Bodenwaschanlage wird der Sand abgetrennt und die Schadstoffe in einer Feinkornfraktion (Ton oder Schluff) angereichert,
b) in einer nachfolgenden Trocknungsanlage wird der Feinkornfraktion das enthaltene Wasser entzogen, bis ein Trockensubstanzgehalt von über 90 Gewichtsprozent erreicht ist,
c) in einer nachgeschalteten thermischen Behandlung (Niedertemperaturkonvertierung) wird das getrocknete Gut von Öl und Quecksilber befreit, und
d) der verbleibende Rückstand (Pyrolysekoks) wird in einem Hochtemperaturofen verbrannt, wobei der mineralische Anteil aufgeschmolzen und als Schmelzgranulat abgezogen wird.

6. Verfahren zur Verwertung von Ölschlamm oder dergleichen nach Anspruch 5,
dadurch gekennzeichnet,
daß der unter c) beschriebene Verfahrensschritt entfallt und das getrocknete Feinkornmaterial direkt in der Hochtemperaturverbrennung eingesetzt wird.

7. Verfahren zur Verwertung von Ölschlamm oder dergleichen nach Anspruch 5,
dadurch gekennzeichnet,
daß die unter b) und c) beschriebenen Verfahrensschritte entfallen und das Feinkornmaterial direkt in der Hochtemperaturverbrennung eingesetzt wird.

8. Verfahren zur Verwertung von Ölschlamm oder dergleichen nach Anspruch 5,
dadurch gekennzeichnet,
daß die unter a) bis c) beschriebenen Verfahrensschritte entfallen und das von groben Bestandteilen gereinigte Material direkt in der Hochtemperaturverbrennung eingesetzt wird.
